(19) Europäisches Patentamt
European Patent Office
Office européen des brevets

(11) **EP 2 767 955 A1**

(12) **EUROPEAN PATENT APPLICATION**
published in accordance with Art. 153(4) EPC

(43) Date of publication:
**20.08.2014 Bulletin 2014/34**

(51) Int Cl.:
*G06T 11/80* (2006.01)   *G06F 3/048* (2013.01)
*G06F 17/50* (2006.01)

(21) Application number: **12835706.8**

(22) Date of filing: **27.03.2012**

(86) International application number:
**PCT/JP2012/057899**

(87) International publication number:
**WO 2013/046758 (04.04.2013 Gazette 2013/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011   JP 2011214718**

(71) Applicant: **Seiko I Infotech Inc.**
**Chiba-shi, Chiba 261-8507 (JP)**

(72) Inventor: **KAWATANI, Satoshi**
**Chiba-shi**
**Chiba 261-8507 (JP)**

(74) Representative: **Miller Sturt Kenyon**
**9 John Street**
**London WC1N 2ES (GB)**

(54) **MEASURING DEVICE AND MEASURING PROGRAM**

(57)   To provide a measuring device configured to display a variable ruler (scale) according to the scale reduction of drawing data when the drawing data is displayed on a display screen, and display a ruler which allows measurement of distances and dimensions irrespective of the scale reduction of the drawing data. If a touch on a displayed ruler 150 with a finger or a pen is detected at one point, the ruler 150 moves in a display screen 51 in the vertical direction or in the horizontal direction in parallel with the pointing (movement) of the finger or the pen. The ruler 150 is moved in parallel in the horizontal direction, and placed to a portion to be measured, so that the values of the ruler 150 can be read visually.

Fig.11

**Description**

[Technical Field]

The present invention relates to a measuring device and a measuring program configured to measure dimensions and distances from drawing data such as design drawing displayed on a display screen of a tablet-type terminal device at a predetermined scale reduction.

[Background Art]

In the related art, in a building site or in a site of civil engineering work, a user touches up a point to be corrected or performs a measurement of dimensions by using a drawing printed on paper. However, in the above-described sites, since there are cases where a huge number of drawings are to be used or where there is no desk or space for the touch-up on the drawings with a writing material, the user is obliged to bear a great burden for carrying the drawings printed on paper/performing work using such drawings.

Therefore, using the drawing data for printing on paper controlled by a drawing database or the like with a terminal device such as an ultraportable tablet-type terminal device attracts the attention.

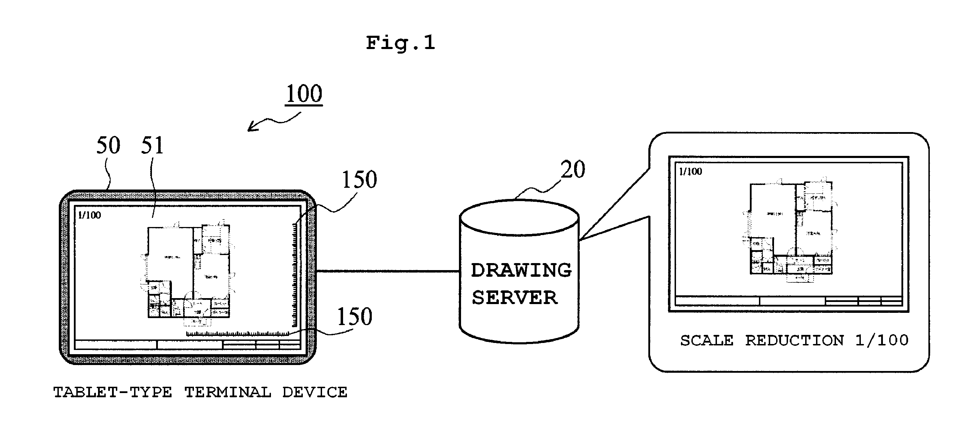

Fig. 1 shows a tablet-type terminal device 50 in a state in which drawing data (a design drawing) is displayed on a display screen 51. The user is capable of viewing, confirming, touching up and correcting the drawing easily. Therefore, convenience for the user is significantly improved in comparison with a case where the drawings printed on paper are used.

In the invention disclosed in Patent Document 1, in a CAD system, a device configured to display a graduated scale on a display screen of a display and allow drawing of lines or measurement of dimensions along the scale by moving the scale is disclosed.

[Citation List]

[Patent Document]

[Patent Document 1] JP-A-9-259295

[Summary of the Invention]

[Problems to be Solved by the Invention]

Incidentally, there is a problem that even when a digital drawing controlled by a drawing database or the like by itself retains scale reduction data compliant to actual dimensions, when the digital drawing is displayed on the display screen (monitor) of the terminal device, the drawing may be displayed at different scale reduction different from a scale reduction compliant to the actual dimensions depending on attributes (the number of pixels, the density thereof and the like) of the display screen. For example, even when the user makes an attempt to perform measurement of dimensions directly from the drawing displayed on the display screen of the terminal device using the measuring instrument such as a triangle scale, accurate dimensions cannot be obtained. This is a disadvantageous point in comparison with the case where the drawings printed on paper are used. Also, in the above-described terminal device, although the dimensions of the drawing data may be enlarged or reduced freely by an operation with fingers or the like, if the measurement of dimensions and distances can be performed as a function of the terminal device itself without using the measuring instrument such as the triangle scale, convenience of the user is dramatically improved.

Accordingly, it is a first object of the present invention to provide a measuring device and a measuring program configured to display a ruler (scale) having variable graduation according to the scale reduction of drawing data when the drawing data is displayed on a display screen, and display a ruler which allows measurement of distances and dimensions irrespective of the scale reduction of the displayed drawing data.

It is a second object of the present invention to provide a measuring device and a measuring program configured to display an actually measured dimension and a distance between two points by pointing the two points when drawing data is displayed on the display screen.

[Means for Solving the Problems]

In the invention described in Claim 1, the first object is achieved by providing a measuring device configured to display drawing data of a digital drawing on a display screen including: digital drawing receiving means configured to receive the digital drawing having scale reduction data when printing the drawing data at actual dimensions; display density data storing means configured to store data relating to a display density of the display screen; scale reduction data extracting means configured to extract scale reduction data from the digital drawing received by the digital drawing receiving means; requested display scale reduction receiving means configured to receive a setting of a requested display scale reduction which is a scale reduction for a display on the display screen; display means configured to perform a computation from the display density data stored in the display density data storing means, the scale reduction data extracted by the scale reduction data extracting means, and the requested display scale reduction received by the requested display scale reduction receiving means, and display the drawing data of the digital drawing on the display screen; and ruler display means configured to display a ruler for measuring the drawing data displayed by the display means, wherein the graduation of the ruler displayed by the ruler display means is set on the basis of a value obtained by the computation performed by the display means.

In the invention described in Claim 1, the invention described in Claim 2 is characterized by including drawing data pointing receiving means configured to receive pointing of the drawing data displayed by the display means; and drawing data movement receiving means configured to move the drawing data received by the drawing data pointing receiving means in the display screen on the basis of a received command.

In the invention described in Claim 1 or Claim 2, the invention described in Claim 3 is characterized by including ruler designation receiving means configured to receive a designation of the ruler displayed by the ruler display means; and ruler movement receiving means configured to move the ruler in the display screen on the basis of a command given to the ruler, which is received by the ruler designation receiving means.

In the invention described in Claim 3, the invention described in Claim 4 is characterized in that if commands are detected at two points of the ruler when the designation of the ruler is received by the ruler designation receiving means, when moving the ruler in the display screen on the basis of the command received by the ruler, the ruler movement receiving means moves the ruler on the basis of an angle indicated by the commands given to the two points.

In the invention described in Claim 5, the second object is achieved by providing a measuring device configured to display drawing data of a digital drawing on a display screen including: digital drawing receiving means configured to receive the digital drawing having scale reduction data when printing the drawing data at actual dimensions; display density data storing means configured to store data relating to a display density of the display screen; scale reduction data extracting means configured to extract scale reduction data from the digital drawing received by the digital drawing receiving means; requested display scale reduction receiving means configured to receive a setting of a requested display scale reduction which is a scale reduction for a display on the display screen; display means configured to perform a computation from the display density data stored in the display data density storing means, the scale reduction data extracted by the scale reduction data extracting means, and the requested display scale reduction received by the requested display scale reduction receiving means, and display the drawing data of the digital drawing on the display screen; point of measurement designation receiving means configured to receive a designation of two points on the drawing data displayed by the display means; distance calculating means configured to calculate the distance between the two points that the point of measurement designation receiving means receives the designation thereof on the basis of a value obtained by the computation performed by the display means; and distance display means configured to display a value calculated by the distance calculating means in an actual distance.

In the invention described in Claim 5, the invention described in Claim 6 is characterized by including: pointer display request receiving means configured to receive a request to display a pointer configured for pointing one point on the drawing data when receiving the designation of the two points by the point of measurement designation receiving means; and pointer display means configured to display the pointer at a designated position on the display screen when the request to display the pointer is received by the pointer display request receiving means.

In the invention described in Claim 5 or Claim 6, the invention described in Claim 7 is characterized by including enlargement request receiving means configured to receive a request to partially enlarge the drawing data when the designation of the two points is received by the point of measurement designation receiving means, and the display means display the drawing data in a partially enlarged scale according to the request of the enlargement request receiving means.

In the invention described in Claim 8, the first object is achieved by providing a measuring program to be executed by a computer in a measuring device configured to display drawing data of a digital drawing on a display screen having display density data storing means configured to store data relating to the display density of the display screen, the measuring program including: a digital drawing receiving function configured to receive a digital drawing having a scale reduction data when printing the drawing data at actual dimensions; a scale reduction data extracting function configured to extract scale reduction data from a digital drawing received by the digital drawing receiving function; a requested display scale reduction receiving function configured to receive a setting of a requested display scale reduction which is a scale reduction for a display on the display screen; a display function configured to perform a computation from the display density data stored in the display density data storing means, the scale reduction data extracted by the scale reduction data extracting function, and the requested display scale reduction received by the requested display scale reduction receiving function, and display the drawing data of the digital drawing on the display screen; and a ruler display function configured to display a ruler for measuring the drawing data displayed by the display function, wherein the graduation of the ruler displayed by the ruler display function is set on the basis of a value obtained by computation performed by the display function.

The invention described in Claim 9, the second object is achieved by providing a measuring program to be executed by a computer in a measuring device configured to display drawing data of a digital drawing on a display screen having display density data storing means configured to store data relating to the display density of the display screen, the measuring program including: a digital drawing receiving function configured to receive the digital drawing having scale reduction data when printing the drawing data at actual dimensions; a scale reduction data extracting function configured to extract scale reduction data from the digital drawing received by the digital drawing receiving function; a requested display scale reduction receiving function configured to receive a setting of a requested display scale reduction which is a scale reduction for a display on the display screen; a display function configured to perform a computation from the display density data stored in the display data density storing means, the scale reduction data extracted by the scale reduction data extracting function, and the requested display scale reduction received by the requested display scale reduction receiving function and display the drawing data of the digital drawing on the display screen; a point of measurement designation receiving function configured to receive a designation of two points on the drawing data displayed by the display function; a distance calculating function configured to calculate the distance between the two points that the point of measurement designation receiving function receives the designation thereof on the basis of a value obtained by the computation performed by the display function; and a distance display function configured to display a value calculated by the distance calculating function in an actual distance.

[Advantages]

According to the invention described in Claim 1 to Claim 4 and Claim 8, actual dimensions and distances can be measured easily using also the ruler (scale) displayed irrespective of the scale reduction at which the drawing data is displayed on the display screen.

Also, according to the invention described in Claim 5 to Claim 7 and Claim 9, since the actually measured dimension between the two points is digitally displayed, the actual dimension can be figured out easily.

[Brief Description of the Drawings]

[Fig. 1] Fig. 1 is an explanatory drawing showing an outline of a measuring device in which a variable ruler is displayed according to an embodiment.

[Fig. 2] Fig. 2 is a drawing showing an example of the measuring device in which the variable ruler is displayed according to the embodiment.

[Fig. 3] Fig. 3 is a block diagram showing a configuration of a drawing server used in the embodiment.

[Fig. 4] Fig. 4 is a drawing showing a configuration of a tablet-type terminal device used in the measuring device.

[Fig. 5] Fig. 5 is a drawing showing an example in which drawing data is displayed at a predetermined fixed scale reduction on a display screen of the tablet-type terminal device according to the embodiment (a display mode).

[Fig. 6] Fig. 6 is a drawing showing an example in which the drawing data is displayed at the predetermined fixed scale reduction on the display screen of the tablet-type terminal device according to the embodiment.

[Fig. 7] Fig. 7 is a drawing showing an example in which the drawing data is displayed at a fixed scale reduction selected on the display screen of the tablet-type terminal device according to the embodiment.

[Fig. 8] Fig. 8 is a flowchart showing a procedure of the embodiment.

[Fig. 9] Fig. 9 is an explanatory drawing showing measurement in the "display mode" in the embodiment.

[Fig. 10] Fig. 10 is an explanatory drawing showing measurement in the "display mode" in the embodiment.

[Fig. 11] Fig. 11 is an explanatory drawing showing measurement by moving the ruler in parallel in a "measurement mode" in the embodiment.

[Fig. 12] Fig. 12 is an explanatory drawing showing the measurement by moving the ruler in an oblique direction in "measurement mode" in the embodiment.

[Fig. 13] Fig. 13 is an explanatory drawing showing measurement in a "digital measurement mode" in the embodiment.

[Fig. 14] Fig. 14 is a drawing showing a state in which a pointer is displayed in the "digital measurement mode" in the embodiment.

[Fig. 15] Fig. 15 is a drawing showing a state in which part of the drawing data is enlarged in the "digital measurement mode" in the embodiment.

[Fig. 16] Fig. 16 is a flowchart showing a procedure of the embodiment.

[Mode for Carrying out the Invention]

Referring now to Fig. 1 to Fig. 16, a measuring device configured to be capable of performing measurement of dimensions and distances in drawing data displayed on a display screen of a tablet-type terminal device according to an embodiment of the present invention.

(1) Summary of the Embodiment

As shown in an outline of the system employing the tablet-type terminal device in Fig. 1, upon reception of a command to display a digital drawing of a design drawing at a designated scale reduction, a tablet-type terminal device 50 acquires a digital drawing of a design drawing stored in a drawing server 20 and displays drawing data such as a design drawing, a construction drawing, or a civil engineering drawing on the basis of the corresponding digital drawing at a scale reduction compliant to the actual dimensions on a display screen 51 in the same manner as the design drawing printed on paper.

In other words, the tablet-type terminal device 50 is configured to be capable of displaying a design drawing accurately on the display screen 51 of the tablet-type terminal device 50 at a scale reduction compliant to the actual dimension from scale-down data of the digital drawing and display density data of the display screen of the tablet-type terminal device.

At the same time, a measuring device 100 displays a ruler 150 which matches the selected scale reduction on the display screen 51. The ruler 150 is configured to vary in graduation according to the selected scale reduction, and is capable of coping with any display scale reduction.

The user is capable of figuring out approximate dimensions in the corresponding drawing by referencing the display ruler 150, and performing accurate measurement by moving the ruler 150 or the drawing itself in the display screen 51 and aligning the ruler 150 at a position to be measured. Therefore, the user is capable of measuring the distances and the dimensions in the same manner as in the case of measuring the drawing drawn on paper using a triangle scale.

(2) Detail of the Embodiment

First of all, referring to Fig. 1, the measuring device 100 according to this embodiment will be described.

In this embodiment, the digital drawing includes drawing data and associated information of the drawing data. Also, the associated information includes scale reduction data when printing the drawing data in actual dimensions, and the resolution of the drawing data.

The printing of the drawing data in actual dimensions means that if the printing according to the scale reduction data is performed, printing in accurate dimensions according to the scale reduction of the scale reduction data is actually achieved. If the printing of the drawing data with the scale reduction data of one to fifty in actual dimensions is performed, the drawing is printed at a scale reduction of one to fifty.

Although the tablet-type terminal device such as a tablet PC will be explained as the measuring terminal 100 in this embodiment as an example, the invention may be applied to various types of portable terminals including a function to display an image on a display screen of a laptop personal computer or of a cellular phone as needed.

The tablet-type terminal device 50 configured to display the drawing data of the digital drawing such as the design drawing is configured to be capable of sending and receiving various data with respect to the drawing server 20 via a network such as internet. The tablet-type terminal device 50, being thin and relatively light weighted, is suitable for carrying along, and is specifically convenient to bring the same to building sites, civil engineering work sites, or sites of measurement, for example.

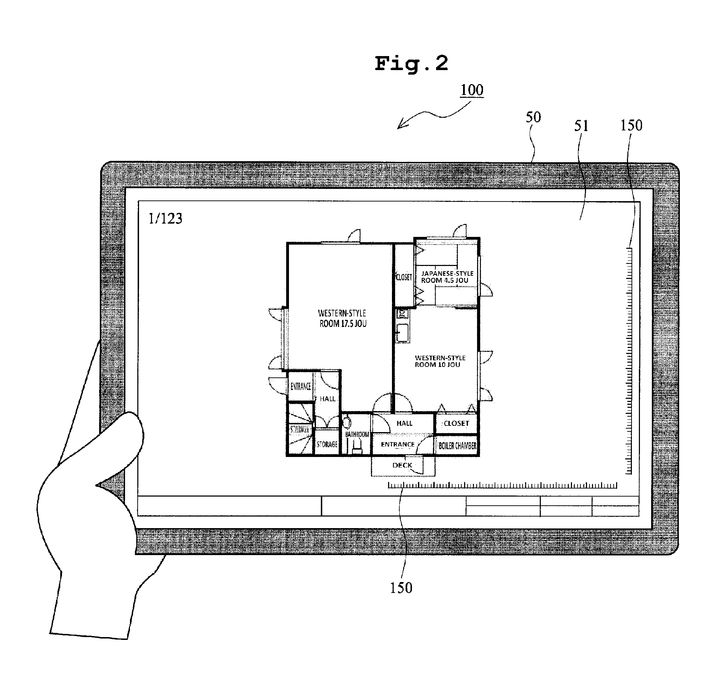

Fig. 2 shows a state in which the ruler 150 is displayed to the display screen 51. The tablet-type terminal device 50 displays the ruler (scale) 150 having approximately half a size of the size in the horizontal direction of the display screen 51, for example, on a lower right portion of the display screen 51.

The ruler 150 used in this embodiment is a scale configured to measure actual dimensions of the drawing drawn at a scale other than the (original) scale. For example, in the case of the drawing at a scale reduction of 1/20, a graduation corresponding to the scale reduction of 1/20 is displayed, so that the actual measurement value can be obtained only by reading dimensions thereof. Therefore, the user of the tablet-type terminal device 50 can obtain an actual measurement value easily without being bothered by any troublesome calculations such as conversion.

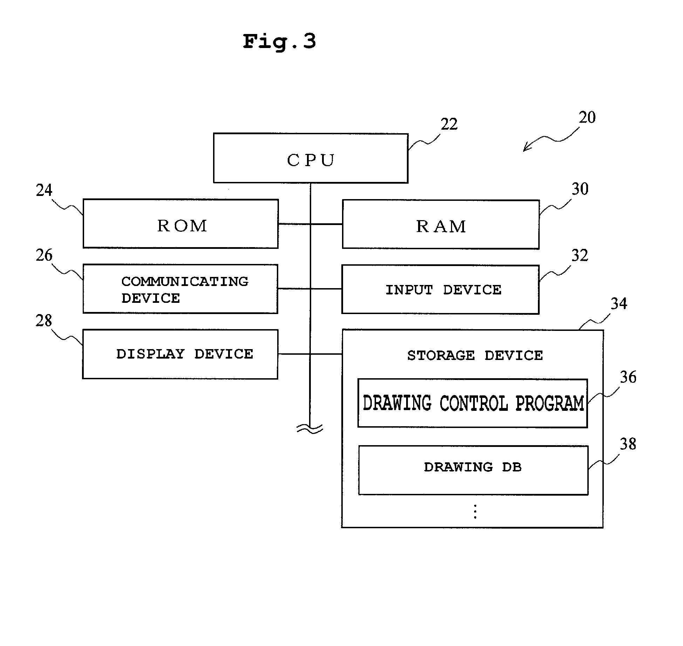

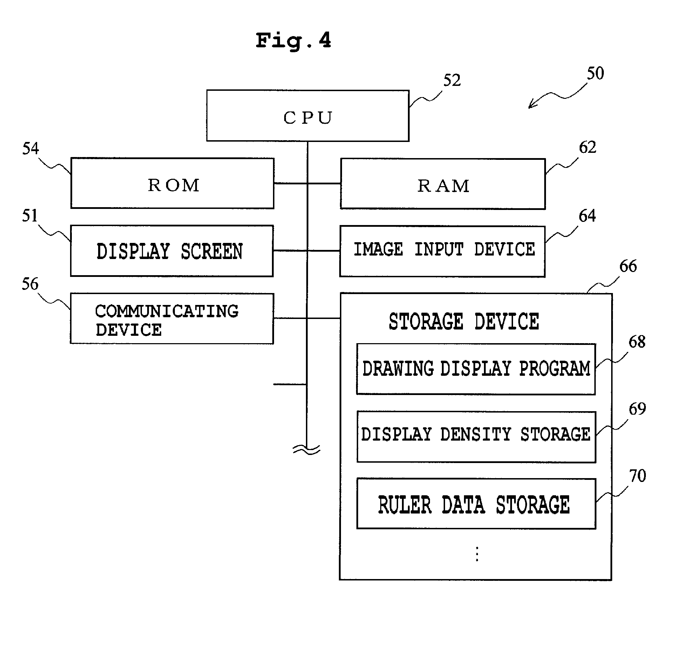

Referring now to Fig. 3 and Fig. 4, configurations of the drawing server 20 and the tablet-type terminal device 50 will be described.

Fig. 3 is a drawing showing the configuration of the drawing server 20.

The drawing server 20 includes a CPU (Central Processing Unit) 22, an ROM (Read Only Memory) 24, a communicating device 26, a display device 28, an RAM (Random Access Memory) 30, an input device 32, and a storage device 34.

The CPU 22 performs information processing or controls various parts of the drawing server 20 according to various programs.

The ROM 24 is a read-only memory in which a basic program or parameters for causing the drawing server 20 to be operated are stored.

The communicating device 26 is a connection interface for connecting the drawing server 20 to a network such as internet. The drawing server 20 transmits the drawing data to the tablet-type terminal device 50 via the communicating device 26.

The display device 28 includes a display device such as a liquid crystal display, and is capable of displaying the stored design drawing or the like.

The RAM 30 is a readable and writable memory configured to provide a working memory when the CPU 22 performs a drawing control process or the like.

The input device 31 serves to input various data.

The storage device 34 includes a mass storage medium such as a hard disk, and stores a drawing control program 36 configured to control the drawing data, a drawing DB (database) 38, and the like.

Fig. 3 is a drawing showing the configuration of the tablet-type terminal device 50 used in the measuring device 100.

The tablet-type terminal device 50 includes a CPU 52, an ROM 54, a communicating device 56, a display device 58, an RAM 62, an image input device 64, and a storage device 66.

The CPU 52 generally controls respective parts of the tablet-type terminal device 50 by executing information processes according to various programs such as drawing display program in this embodiment.

The ROM 54 is a read only memory in which various programs to be executed by the CPU 52 or parameters required for executing the corresponding programs are stored.

The display screen 51 is a display device such as a liquid crystal display and is configured to be capable of displaying drawing data such as the design drawing at a predetermined scale reduction. Display density data of the display screen 52, which is numerical values expressed by "number of pixels of the display screen/actual dimension of an actual display area of the display screen" of the display screen 51 is stored in a display density storage 69 described later.

The communicating device 56 is a communication interface for connecting to the network such as internet. The digital drawing is received from the drawing server 20 via the communicating device 56.

Although the communicating device 56 functions as digital drawing acquiring means, the digital drawing may be acquired in other methods. For example, acquisition via a semiconductor memory such as a USB (Universal Serial Bus) is also applicable. In addition, direct acquisition from the storage device 66 of the tablet-type terminal device 50 is also applicable. In this case, the storage device 66 stores the drawing data of the digital drawing in advance.

Also, acquisition from a PC by wired connection or radio connection to the PC in which the drawing data of the digital drawing is stored is also applicable.

The RAM 62 is a readable and writable memory configured to provide a working memory when the CPU 52 performs a drawing control process or the like.

The image input device 64 is a touch panel which detects selection of "selection keys" displayed on the display screen 51 or commands such as enlargement or reduction of the drawing data by the user's finger or the like.

The storage device 66 includes a mass storage medium such as the hard disk or EEPROM (Electrically Erasable Programmable ROM), and stores a drawing display program 68 configured to display the drawing data in an enlarged or reduced scale.

The CPU 52 references attribute information included in the received digital drawing by executing the drawing display program 68, and displays the design drawing at a fixed scale reduction selected by comparing the attribute information with the display density of the display screen 51 on the display screen 51. Also, the CPU 52 displays the drawing data of the digital drawing in an enlarged or reduced scale on the display screen 51 according to the designated scale reduction.

The storage device 66 includes the display density storage 69, in which the above-described display density is stored.

The display density may be expressed by an unit of ppi. The unit ppi is a value expressing how many pixels are included in one inch, and may be expressed by dpi (the number of dots per one inch), which is referred to as the resolution of the display screen.

The storage device 66 includes a ruler data storage 70, which stores the respective requested display scale reduction, for example, graduations of the ruler 150 corresponding to fixed values such as "1/25". "1/50", "1/100", "1/150", "1/200", "1/250", and "1/300".

Subsequently, the digital drawing used in this embodiment will be described.

The digital drawing stored in the drawing DB (database) 38 of the drawing server 20 includes drawing data for displaying the drawing itself and attribute information which indicates the attribute of the drawing data as components.

As the attribute information, for example, the scale reduction data indicating the scale reduction when performing a printing of the digital drawing (that is, data of numerical value such as a fraction) in actual dimensions on paper, the resolution in the vertical direction and the horizontal direction (the case of a raster format drawing data) is included.

The term "resolution" here means the density of bitmap, and is expressed by an unit of dpi. The unit dpi is a value expressing how many dots (bitmaps) are included in one inch, and the larger the value of dpi, the more clear the drawing (image) is expressed with fine tones.

The drawing data of the digital drawing may be configured with vector format data or raster format (bitmap format) data.

The term "vector format data" here means a system which controls all drawing (graphic) data to be processed in a computer in the form of numerical values. In this vector system, a drawing (graphic) is retained as coordinate data of respective apexes or the like and the drawing is expressed by performing a computation of information on line which defines a contour every time when it is displayed. Therefore, by performing changing the size or deformation of the drawing (graphic), a drawing (graphic) corresponding thereto may be displayed. Therefore, the vector system is a system suitable for the design drawing which is subject to the correction or deformation very often. Also, the vector system is a system also suitable for being used in the tablet-type terminal device which executes enlargement and reduction displays very often.

In contrast, the raster format data is a system which constitutes the image in the bitmap format.

If the digital drawing data is in the vector format and the scale reduction when printed on paper is one to fifty, the scale reduction data is "1/50".

In contrast, when the drawing data is in the raster format, the drawing resolutions in the vertical and horizontal directions are respectively retained as the attribute information.

There are devices in which the display densities in the vertical direction and in the horizontal direction are different among the display screens 51 used in the tablet-type terminal devices 50. For example, there is a device which displays the drawing in the density of 150 dpi in the vertical direction and 100 dpi in the horizontal direction.

Therefore, the drawing data is needed to be displayed on the display screen 51 by performing a computation of the difference in aspect ratio using the respective densities in the vertical direction and in the horizontal direction.

In contrast, in the case of the drawing data (bitmap data) in the raster format, it is needed to retain and control both of the drawing resolution in the vertical direction and the resolution in the horizontal direction in addition to the scale reduction data as the attribute information.

In the related art, even though the drawing data of the digital drawing sent from the drawing server 20 is displayed on the display screen 51 as-is, the drawing data cannot necessarily be displayed on the scale reduction compliant to the actual dimensions. It is because the densities of the display screens are different from device to device, and the display is created without taking such a difference into consideration. Therefore, since the density of the display screen is not taken into consideration even though it is claimed as being "actual-dimension display", the accurate "actual-dimension display" cannot be obtained, it is nothing more than a claim in a broad meaning.

Therefore, in this embodiment, the drawing data of the digital drawing at the required scale reduction is generated after having replaced the drawing data of the digital drawing with a scale corresponding to the display screen considering the display density of the display screen 51. Accordingly, the drawing data of the digital drawing compliant to the scale reduction data when performing printing in the actual dimension can be displayed.

Incidentally, the term "display density" means numerical values expressed by "number of pixels of the display screen/actual dimension of an actual display area of the display screen", and the numbers of pixels (number of dots) per predetermined unit respectively in the vertical direction and the horizontal direction are stored in the display density storage 69.

Subsequently, this embodiment will be described by showing detailed numerical values.

Here, the term nominal density is a value showing how many pixels (dots) per inch exist in the corresponding screen, which is published by a manufacturer of the corresponding display screen.

The term "requested display scale reduction" means a scale reduction requested when the user makes an attempt to display the drawing data of the digital drawing and, for example, if a requested display scale reduction of one to fifty is issued from the user, in this embodiment, the drawing which has completely the same size both on the left and right as the drawing to be printed actually on paper having a scale reduction of one to fifty is displayed on the display screen 51.

In the tablet-type terminal device 50 according to this embodiment, the display densities of the display screen 51 respectively in the vertical direction and in the horizontal direction are retained. In other words, these display densities are stored in the display density storage 69 of the storage device 66.

For example, in the display screen 51 of a certain tablet-type terminal device 50, when the number of pixels is 768 pixels in a display area in the vertical direction and the actual length thereof is approximately 148mm, and the number of pixels is 1024 pixels in a display area in the horizontal direction and the actual length of the same is approximately 197 mm, and the nominal density is 132 ppi (pixel per inch), the "display density" is 132.

Here, a coordinate conversion value used in this embodiment will be described.

The term "coordinate conversion value" means a value expressed by "(scale reduction data/requested display scale reduction) x display density" (Expression 1). Hereinafter, this expression is referred to as "Expression 1". By obtaining this coordinate conversion value accurately and multiplying the coordinate value of the vector format drawing data by the obtained value, the drawing data is displayed accurately on the display screen 51 at a scale reduction compliant to the actual dimensions. The unit of the coordinate value of the drawing data in this case is inch, which is the same as the unit of the coordinate value of the display screen.

Although a case in which the coordinate conversion values in the vertical direction and in the horizontal direction are the same will be described in this embodiment, there is also a case where these values are different. In this case, the vertical coordinate conversion value and the horizontal coordinate conversion value are calculated individually.

First of all, a case where the drawing data is in the vector format will be described.

It is assumed that scale reduction data of one to fifty is retained as the associated information of the drawing data to be displayed.

When the drawing data is displayed for the first time in the tablet-type terminal device 50, the coordinate conversion values in the vertical direction and in the horizontal direction are both the following values from "(scale reduction data/requested display scale reduction) x display density" (Expression 1).

$$\text{Coordinate Conversion Value} = ((1/50)/(1/50)) \times 132 = 132$$

Then, the tablet-type terminal device 50 performs a computation of multiplying the coordinate value of the drawing data in the vector data format by the calculated coordinate conversion value "132" and displays the drawing data of the digital drawing on the display screen 51.

The coordinate conversion values in a case where the requested display scale reduction selected by the tablet-type terminal device 50 both in the vertical direction and in the horizontal direction is one to hundred will be the following value from (Expression 1).

$$\text{Coordinate Conversion Value} = ((1/50)/(1/100)) \times 132 = 66$$

Then, the tablet-type terminal device 50 performs a computation of multiplying the coordinate value of the drawing data in the vector data format by the calculated coordinate conversion value "66" and displays the drawing data of the digital drawing on the display screen 51.

Subsequently, a case where the drawing data is in the raster format will be described.

In this case as well, it is assumed that vertical and horizontal resolutions of 600 dpi are retained in addition to scale reduction data of one to fifty as the associated information of the drawing data to be displayed.

In contrast, it is assumed that the display density of the display screen 51 is 132 ppi (pixel per inch).

Here, when a selection of a requested display scale reduction of one to fifty of the tablet-type terminal device is received from the user, if the drawing data is in the raster format, the coordinate conversion value in both the vertical and horizontal directions becomes the value obtained by dividing "(scale reduction data/requested display scale reduction) x display density" (Expression 1) by the drawing resolution, and hence is 50/50 x 132/600 = 0.22.

Then, the tablet-type terminal device 50 performs a computation of multiplying the pixel coordinate value of the raster data by 0.22 and displays the drawing data of the digital drawing on the display screen 51.

Here, when a selection of a requested display scale reduction of one fifty to one hundred of the tablet-type terminal device is received from the user, the coordinate conversion values in both the vertical and horizontal directions become 50/100 x 132/600 = 0.11 from "(scale reduction data/requested display scale reduction) x display density" (Expression 1).

Then, the tablet-type terminal device 50 performs a computation of multiplying the pixel coordinate value of the raster data by 0.11 and displays the drawing data of the digital drawing on the display screen 51.

Subsequently, the detailed examples of displays of the drawing data and the ruler 150 on the display screen 51 in the tablet-type terminal device 50 according to this embodiment will be described.

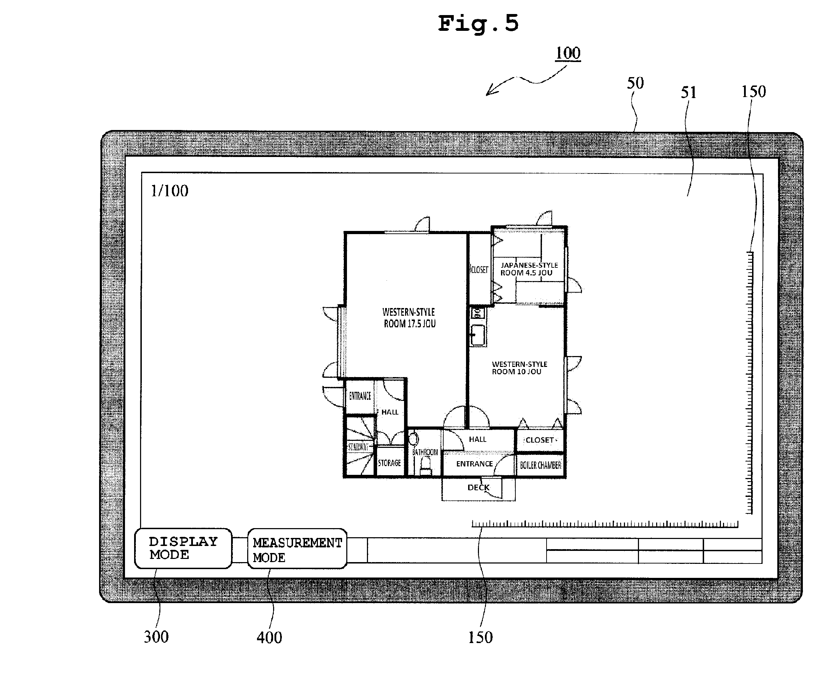

Fig. 5 is a drawing showing a state in which the drawing data (design drawing) of the digital drawing received from the drawing server 20 is displayed on the display screen 51. In this example, since one to hundred is retained as the scale reduction data, scale reduction data of the drawing data, that is, 1/100, is used as a default value of the requested display scale reduction when displaying the drawing data for the first time.

In order to apparently indicate the scale reduction being displayed, a display of the scale reduction "1/100" is shown on an upper left of the display screen 51. The scale reduction display may be hidden by the selection by the user.

In this example, the first display is assumed to be the display corresponding to the scale reduction data, which is associated information of the received digital drawing, this embodiment is not limited thereto. For example, the drawings may be set to be displayed across the board in a fixed scale reduction, or may be configured to receive a setting from the user in advance every time.

The drawing data (design drawing) displayed on the display screen 51 has completely the same dimensions as the drawing data when performing the printing in the actual dimension.

Here, the tablet-type terminal device 50 displays the ruler 150 having on the order of half a screen size in the vertical and horizontal directions at a lower right corner of the display screen 51. This ruler 150 is provided with a graduation corresponding to "1/100", and the actual dimensions and distances of the drawing data displayed on the display screen 51 may be measured by reading the graduations of the ruler 150.

The graduation provided on the ruler 150 has exactly the same scaling as the graduation of the triangle scale corresponding to the display scale reduction "1/100" of the triangle scale.

Therefore, by directly reading the graduation on the display screen 51 corresponding to "1/100" of the triangle scale, the actual dimensions and the distances may be measured.

The display of the ruler 150 by the tablet-type terminal device 50 is configured to be achieved upon reception of the user's selection from the user. More specifically, the ruler 150 is displayed after having detected that a "display mode" button 300 on the display screen 51 is pressed. Also, the ruler 150 may be set to be displayed across the board when displaying the drawing data.

The tablet-type terminal device 50 displays the graduation of the ruler to be displayed thereon by acquiring the graduation corresponding to the requested display scale reduction from the ruler data storage 70.

Although the ruler 150 displayed in this example has a length of approximately 1/2 of the display screen 51 in the horizontal direction, a length on the order of 3/4 is also applicable. It is also possible to display the ruler 150 over the lower surface and the right surface entirely.

Hereinafter, as shown in Fig. 5, a state in which the ruler 150 is displayed, but the drawing data is allowed to be enlarged or reduced is referred to as "display mode", and a state in which the ruler 150 is displayed, the drawing data is not allowed to be enlarged or reduced, and measurement is performed is referred to as "measurement mode".

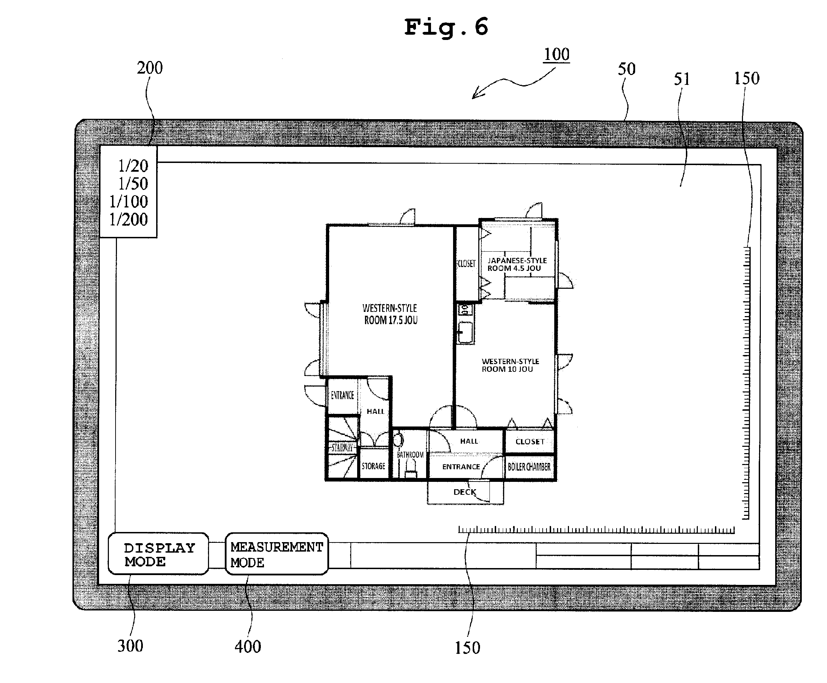

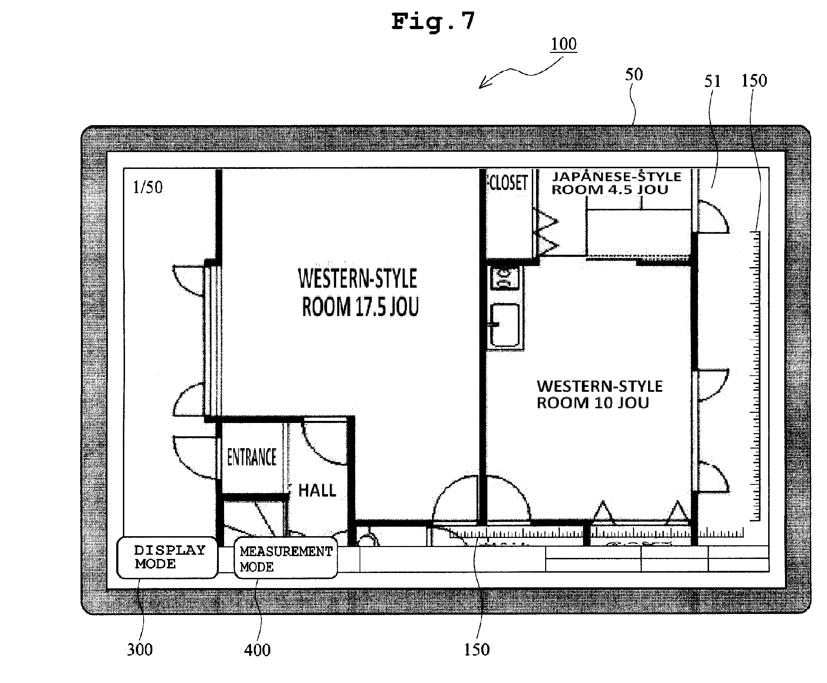

Subsequently, referring to Fig. 6 and Fig. 7, a procedure of changing the scale reduction of the drawing data to be displayed and changing the graduation of the ruler 150 simultaneously will be described.

In the tablet-type terminal device 50 according to this embodiment, a request of an actual-dimension display may be issued at a fixed scale reduction used generally on the paper drawing. In an example shown in Fig. 6, the drawing data is displayed at "1/100" as indicated on the scale reduction display on the upper left of the display screen 51. A case where the drawing is doubled in size and is displayed at "1/50" will be described.

When the user selects the scale reduction display "1/100" (see Fig. 5) displayed on the upper left of the display screen 51, the tablet-type terminal device 50 displays a fixed scale reduction menu 200 indicating a plurality of fixed scale reduction in a pull-down menu form as shown in Fig. 6.

In this manner, by the display of the fixed scale reduction menu 200 on the tablet-type terminal device 50, the user is allowed to select a desired scale reduction to be displayed next easily.

The fixed scale reduction menu 200 includes, for example, 1/20, 1/50, 1/100, 1/200 corresponding to the numerical values which are generally used in the measurement with the triangle scale.

It is assumed here that selection of a scale reduction of "1/50" in the fixed scale reduction menu 200 is received from the user. This value corresponds to the "requested display scale reduction".

The tablet-type terminal device 50 calculates the coordinate conversion value from the selected requested display scale reduction, the attribute information (scale reduction data "1/100") of the digital drawing, and the display density of the display screen 51, and displays the drawing data in the actual dimensions on the display screen 51.

More specifically, in the example of the tablet-type terminal device 50 described above, when displaying the vector format drawing data, the coordinate conversion values in the vertical and horizontal directions are both $((1/100)/(1/50)) \times 132 = 264$ from the "(scale reduction data/requested display scale reduction) × display density" of Expression 1.

Then, the tablet-type terminal device 50 performs a computation of multiplying the respective coordinate values of the drawing data in the vector format by the coordinate conversion value 264 and displays the drawing data of the digital drawing on the display screen 51.

Fig. 7 is a drawing showing an example in which the drawing data is displayed at the scale reduction "1/50" according to the selection of the user.

As shown in Fig. 7, the drawing data is displayed in a double size in the vertical direction and in the horizontal direction in comparison with Fig. 5 before the selection.

In this case, on the upper left of the display screen 51, a fixed scale reduction ("1/50") currently selected by the user is distinctively displayed as the scale reduction display as shown in Fig. 7.

Here, the rulers 150 displayed respectively in the vertical direction and in the horizontal direction at a lower right corner of the display screen 51 are not changed in length of its own, but the displayed graduation associated thereto is changed from the graduation corresponding to "1/100" to "1/50".

The graduation provided on the ruler 150 has exactly the same scaling as the graduation of the triangle scale corresponding to the display scale reduction "1/50".

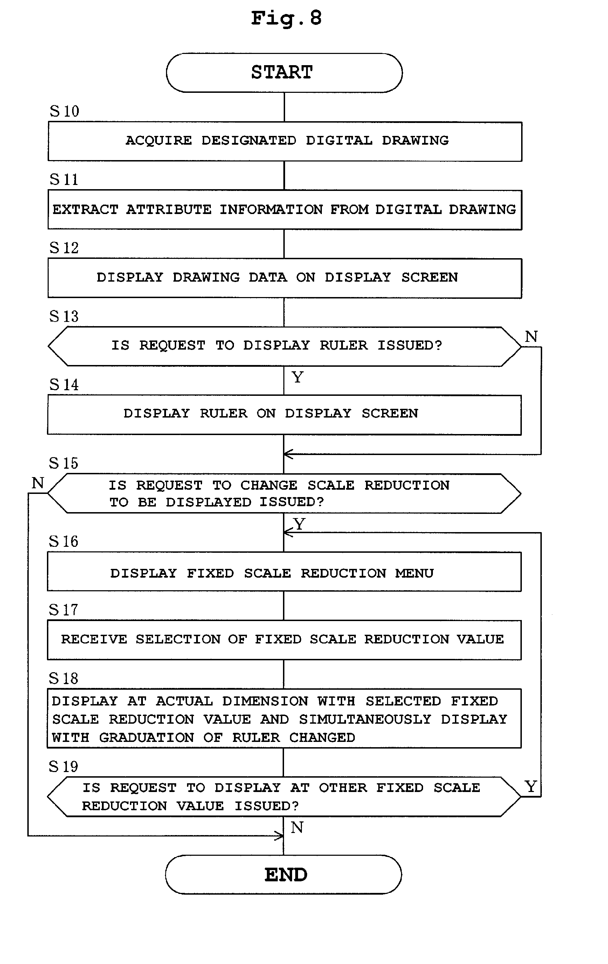

Subsequently, the display of the digital drawing at the fixed scale reduction by the tablet-type terminal device 50 and a procedure thereof will be described with reference to a flowchart in Fig. 8.

The display process by this fixed scale reduction is performed by the CPU 52 executing the drawing display program 68.

Upon reception of a request which designates a design drawing to be displayed on the tablet-type terminal device 50 from the user, the CPU 52 accesses the drawing server 20 via a network. At this time, information designated by the user (user ID or password) is sent to the drawing server 20 as needed.

Subsequently, when the user selects or inputs a drawing number or the like of a digital drawing desired by the user, the CPU 52 sends the drawing number or the like to the drawing server 20 and requests the digital drawing.

When the digital drawing corresponding to the drawing number or the like designated by the drawing server 20 is sent in response to the request, the CPU 52 receives the digital drawing via the communicating device 56 (Step 10). Hereinafter, the drawing data of the digital drawing will be described as being in the vector format as an example.

Subsequently, the CPU 52 extracts the attribute information from the digital drawing received in Step 10 (Step 11). More specifically, since the drawing data is in the vector format, the scale reduction data is extracted. When the drawing data is in the raster format, the resolution is also extracted.

Subsequently, the CPU 52 acquires the display density of the display screen 51 stored in the display density storage 69, and displays the drawing data on the display screen 51 using the display density and the scale reduction data acquired as the attribute information (Step 12).

In other words, the CPU 52 uses the scale reduction data of the drawing data as a default requested display scale reduction when performing a computation of the coordinate conversion value on the basis of Expression 1. Then, the CPU 52 displays the drawing data (the design drawing) on the display screen 51, as shown in Fig. 6, by multiplying the respective coordinate values of the drawing data by the coordinate conversion value obtained by the computation. At this time, simultaneously, the display of the scale reduction display "1/100" is created on the upper left of the display screen 51.

Subsequently, the CPU 52 determines whether or not there is a command of display of the ruler 150 from the user (Step 13). More specifically, whether or not to detect the pressing of the "display mode" button 300 displayed on the display screen 51 is determined.

Consequently, when the CPU 52 detects that the "display mode" button 300 is pressed (Step 13; Y), two of the rulers 150 are displayed in the vertical direction and in the horizontal direction from the lower right corner of the display screen 51 (Step S14). The graduation of the rulers 150 at this time are displayed by the CPU 52 by acquiring data of the graduation corresponding to the "requested display scale reduction", "1/100" from the ruler data storage 70.

In contrast, when the CPU 52 does not detect that the "display mode" button 300 is pressed (Step 13; N), the display of the ruler 150 is not created.

Subsequently, upon reception of a command of display of the fixed scale reduction menu 200 for changing the scale reduction to be displayed from the user (Step 15; Y), the CPU 52 displays the fixed scale reduction menu 200 in which a plurality of the fixed scale reductions are marked on the upper left of the display screen 51 as shown in Fig. 7 (Step 16).

Subsequently, the CPU 52 receives the selection of a specific fixed scale reduction from the fixed scale reduction menu 200 displayed on the display screen 51 from the user (Step 17).

Subsequently, upon reception of the selection of the fixed scale reduction in Step 17, the CPU 52 performs a computation in the same manner as the computation performed in Step 12 using the received fixed scale reduction as the requested display scale reduction. In other words, since there is no change in scale reduction data and display density, the CPU 52 computes a coordinate conversion value on the basis of Expression 1 using the selected fixed scale reduction "1/50" as the "requested display scale reduction", and displays the drawing data on the display screen 51 using the obtained coordinate conversion value as shown in Fig. 7. At this time, the CPU 52 simultaneously acquires "requested display scale reduction" and data of the graduation corresponding to "1/50" from a ruler data storage 170, and changes the graduation for display (Step 18).

At this time, the CPU 52 displays the selected fixed scale reduction value "1/50" as the scale reduction display on the upper left of the display screen 51 together with the drawing data (the design drawing) as shown in Fig 7.

Subsequently, the CPU 52 determines whether or not there is a command of display at another fixed scale reduction value (the selection of the fixed scale reduction) from the user (Step 19) and, if it is determined to be yes (Step 19; Y), the process from Step 16 onward is continued.

On the other hand, when the CPU 52 determines that there is no command of display at another fixed scale reduction value from the user (Step 19; N), the process relating to this flowchart is ended.

A process of changing the mode from the "display mode" to the "measurement mode" will be described later.

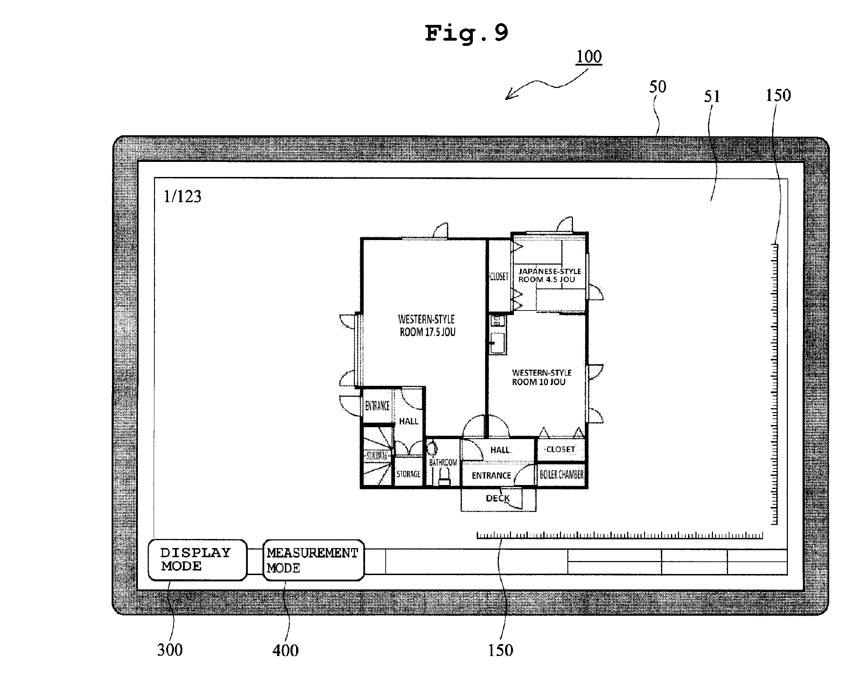

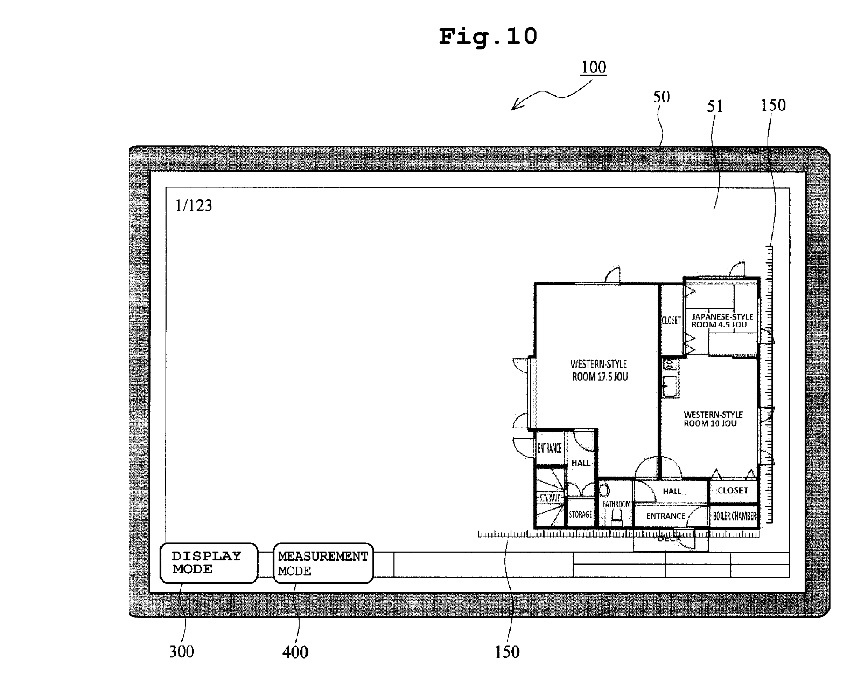

Subsequently, referring to Fig. 9 and Fig. 10, the measurement in the "display mode" will be described. The "display mode" means a state of the display screen 51 in which the ruler 150 is displayed but enlargement and reduction of the drawing data is possible.

In this "display mode", the ruler 150 is set not to be movable, and hence the measurement is performed by moving the drawing data, which is an object to be measured, toward the ruler 150. Fig. 9 shows the "display mode".

The movement of the drawing data is performed by pointing the drawing data with the user's finger, and moving the finger which is detected by the image input device 64 configured as a touch panel along the surface of the display screen 51. Fig. 10 shows a state in which the drawing data is moved until it comes into contact with the ruler 150. By this operation, the measurement can be performed even in the "display mode".

In the example shown in Fig. 9 and Fig. 10, the requested display scale reduction is "1/123". The above-described coordinate conversion value is obtained by (Expression 1), that is, "(scale reduction data/requested display scale reduction) x display density". Since the "scale reduction data" and the "display density" in this expression are fixed, the coordinate conversion value is obtained by assigning "1/123" to the "requested display scale reduction". Then, the tablet-type terminal device 50 performs a computation of multiplying the coordinate value of the drawing data in the vector data format by the calculated coordinate conversion value and displays the drawing data of the digital drawing on the display screen 51.

Therefore, in this embodiment, the device is accessible even when the requested display scale reduction is not a fixed value such as "1/25", "1/50", "1/100", "1/150", "1/200", "1/250" and "1/300".

Subsequently, enlargement and reduction of the drawing data displayed on the display screen 51 by the input from the image input device 64 configured as a touch panel will be described.

In this embodiment, the tablet-type terminal device 50 detects the movement of the user's finger, and creates an enlarged or reduced display of the drawing data corresponding to the magnitude of the detected finger movement. This means that the requested display scale reduction described above is changed by the detected movement of the finger. In this configuration, for example, enlargement and reduction of the drawing data can be performed finely by changing the requested display scale reduction from "1/122" to "1/123", then to "1/124", and then returning to "1/123".

Subsequently, the graduation of the ruler 150 will be described.

If the requested display scale reduction of the user is the fixed value such as "1/25", "1/50", "1/100", "1/150", "1/200", "1/250", and "1/300" stored in the ruler data storage 70, the tablet-type terminal device 50 may display the graduation of the ruler 150 stored therein in a predetermined position of the display screen 51.

Also, when the requested display scale reduction of the user is changed, an adjustment such as broadening or narrowing spacing of the graduation of the ruler 150 on the basis of the above-described coordinate conversion value may be performed.

However, when the requested display scale reduction of the user is significantly changed, it may be better to change the graduation of the ruler 150 to be referenced to make it user friendly.

To be specific, it is assumed that the initial requested display scale reduction "1/100" is enlarged gradually and reaches "1/50". At the beginning, the spacing of the graduation of "1/100" may be broadened gradually and, in a stage where the spacing of the graduations exceeds, for example, a midpoint "1/75", the reference graduation is changed to "1/50", and the ruler 150 having the graduation with narrower spacing "1/50" is displayed.

The stage of changing the reference graduation of the ruler 150 to be displayed is not limited to the midpoint, and may be determined as needed.

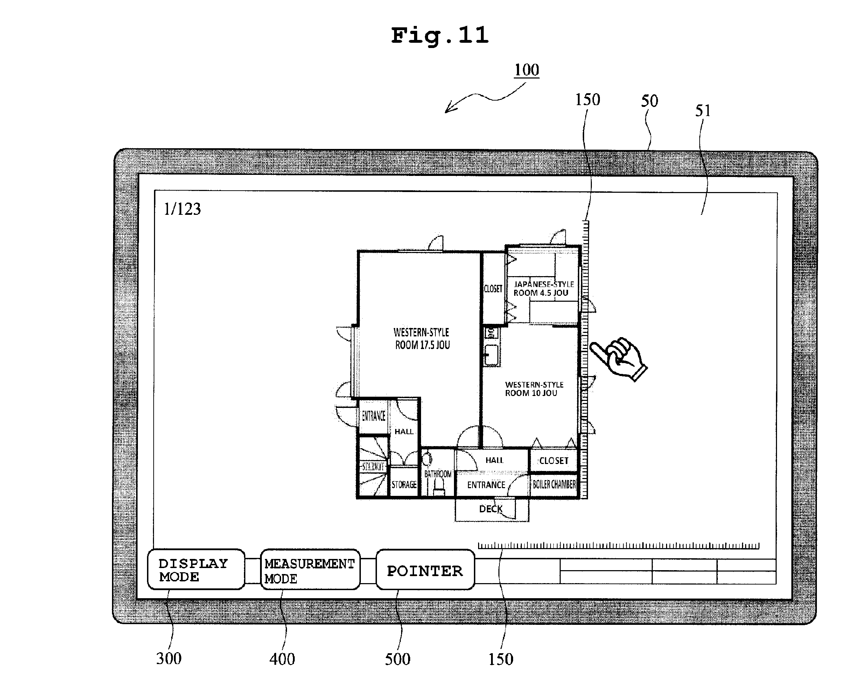

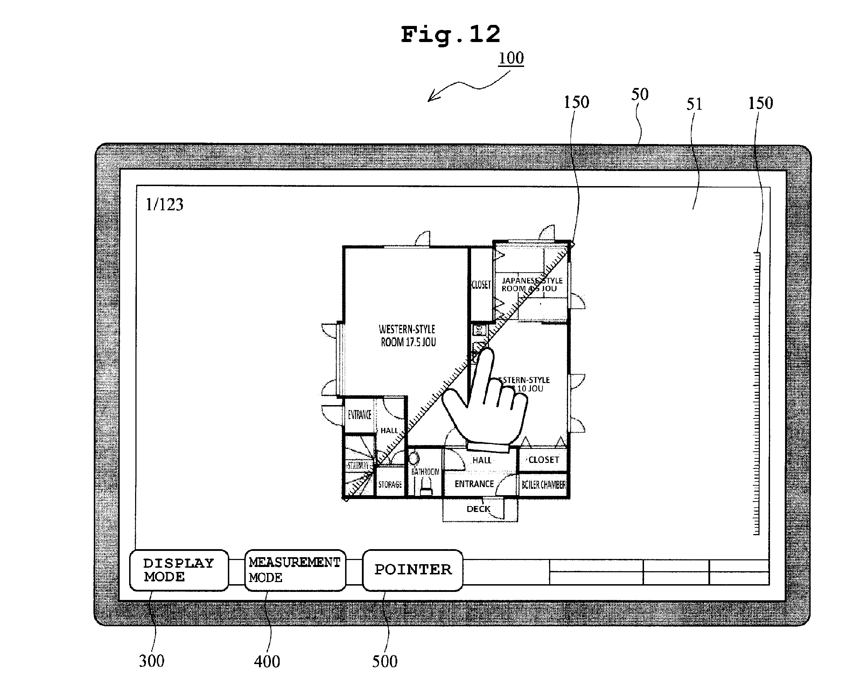

Subsequently, referring to Fig. 11 and Fig. 12, the measurement in the "measurement mode" will be described.

When the tablet-type terminal device 50 detects that the user presses a measurement mode button 400, the display screen 51 changes from the "display mode" to the "measurement mode". When the mode is changed to the "measurement mode", the enlargement and reduction of the drawing data is disabled from then on.

Here, it is assumed that the tablet-type terminal device 50 detects a touch with a finger or a pen to the displayed ruler 150 by an input from the image input device 64 configured as the touch panel.

If it is detected at one point, the ruler 150 moves in the display screen 51 in the vertical direction or in the horizontal direction in parallel with the pointing (movement) of the finger or the pen. In an example shown in Fig. 11, the ruler 150 is moved in parallel in the horizontal direction, and placed to a portion to be measured, so that the value of the ruler 150 can be read visually. In other words, the ruler 150 plays the same role as the triangle scale.

When the tablet-type terminal device 50 detects at two positions by a touch pen or a finger to the displayed ruler 150 ruler 150 is moved along the angle indicated by 2 points. In an example shown in Fig. 12, the ruler 150 is moved obliquely and the dimension in the direction of a diagonal line of the drawing data is measured.

In this example, the ruler 150 may be placed in an arbitrary orientation in the digital drawing to allow visual reading of the value.

Subsequently, a "digital measurement mode" in which the dimension and the distance between two points are displayed with numerical values will be described.

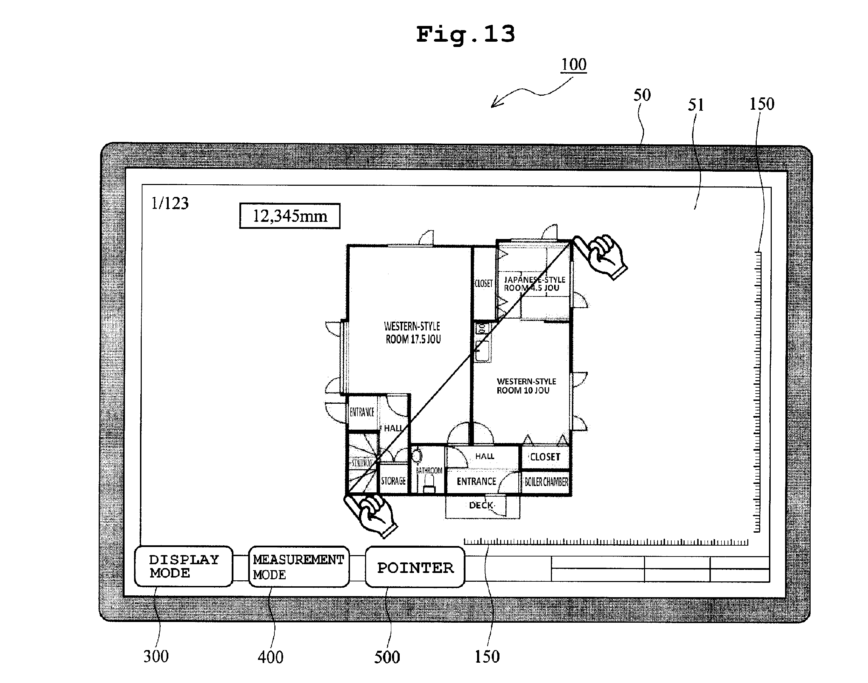

Fig. 13 is a drawing showing an example in which an example of the "digital measurement mode" to display the distance between two points accurately in a digital display. In this example, the user does not read the distance visually using the ruler 150, but reads the numerical values digitally displayed.

When the tablet-type terminal device 50 further detects that the user presses the measurement mode button 400 in the "measurement mode", the mode is changed to the "digital measurement mode".

It is assumed that the tablet-type terminal device 50 detects the touch with the finger or the pen to the drawing data on the display screen 51 at two points in sequence by the input from the image input device 64 configured as the touch panel. Here, the tablet-type terminal device 50 acquires the detected coordinate data at the two points, performs a computation using the above-described coordinate conversion value, and obtains the dimension in a real world.

In an example shown in Fig. 13, an actual numerical value "12,345 mm" is displayed on the display screen 51.

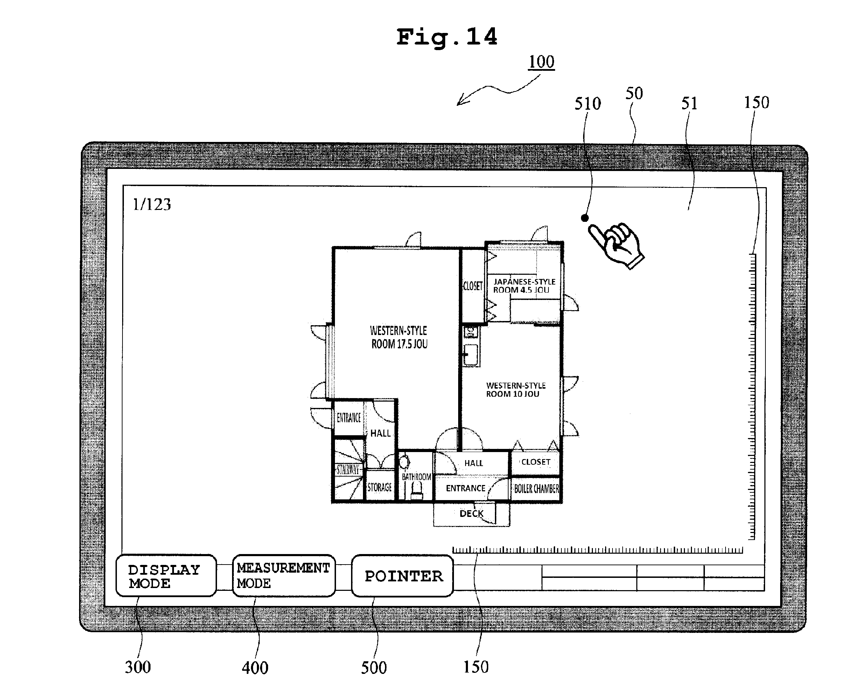

Fig. 14 is a drawing showing an example in which "pointer display and offset function" for measuring between two points to be measured more accurately in the "digital measurement mode".

When operating the display screen 51 with the finger, an accurate position can hardly be pointed because the finger lies in the way in some cases. When the tablet-type terminal device 50 detects that the user presses a "pointer" button 500, the display screen 51 displays a pointer 510 at a position shifted, for example, by 10 mm leftward and upward respectively. The pointer 510 is configured to be moved in association with the movement of the finger, accurate positioning is achieved.

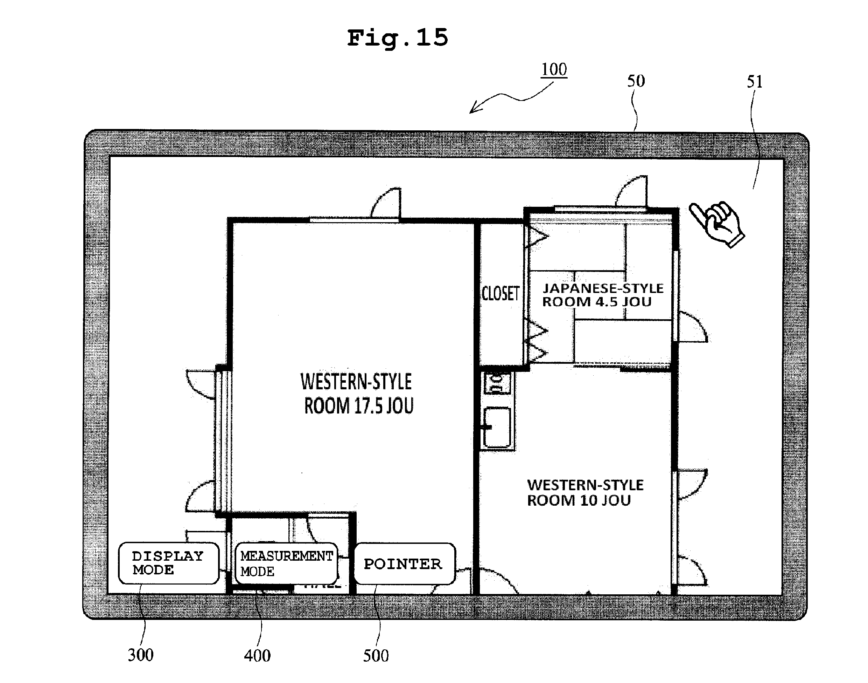

Fig. 15 is a drawing showing an example in which the drawing data is partly enlarged for measuring between two points to be measured more accurately in the "digital measurement mode".

In an example shown in Fig. 15, if the tablet-type terminal device 50 detects a long-time pressing with the finger from the user, the drawing data displayed on the display screen 51 is doubled in the vertical and horizontal directions respectively about a position near the finger or the pointer 510. When the long-time pressing is further continued, the drawing data is displayed in double in magnification (quadruples in total) again in the vertical and horizontal directions respectively.

Here, when the tablet-type terminal device 50 detects that the user's finger is moved out of contact from the display screen 51, the drawing data on the display screen 51 is returned back to the scale reduction at the beginning of measurement (reduced). The device may be configured to receive a specific pen to make this operation.

As another method, when the tablet-type terminal device 50 detects that the user keeps touching the display screen 51 with one finger and makes another touch with another finger at an adequate distance apart, the drawing data is doubled in the vertical and horizontal directions respectively about the position near the finger or the pointer. When the tablet-type terminal device 50 detects another one touch, the drawing is displayed in double in magnification (quadruples in total) again in the vertical and horizontal directions, respectively.

Here, when the tablet-type terminal device 50 detects that the first finger is moved out of contact from the display screen 51, the drawing data on the display screen 51 is returned back to the scale reduction at the beginning of measurement (reduced).

According to this embodiment, an accurate dimension between two points is displayed in an actual dimension without using the ruler 150 or the triangle scale.

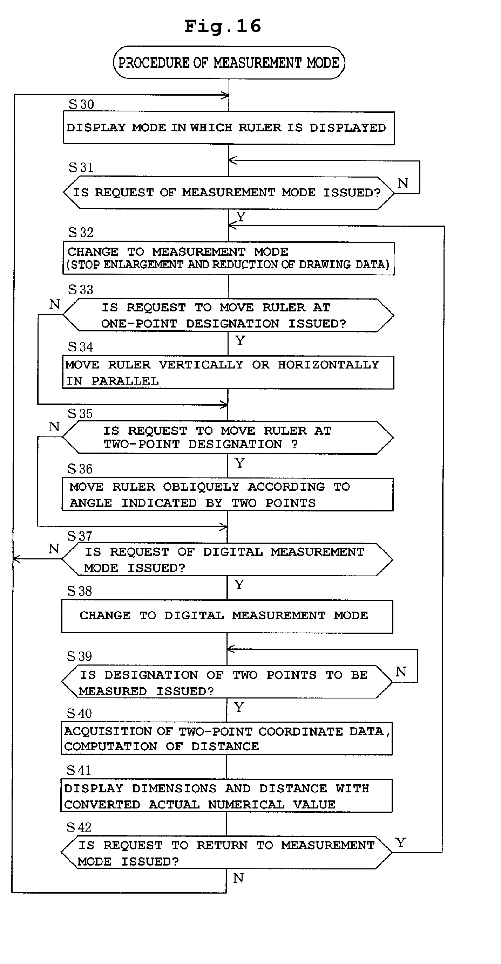

Subsequently, the procedure in the "measurement mode" in this embodiment will be described with reference to a flowchart in Fig. 16. This process is performed by the CPU 52 executing the drawing display program 68.

As shown in Fig. 16, first of all, when the CPU 52 detects that the measurement mode button 400 is pressed (Step 31; Y) in a state in which the "display mode" is set (Step 30), the display screen 51 is changed from the "display mode" to the "measurement mode". When the mode is changed to the "measurement mode", the enlargement and reduction of the drawing data is disabled from then on (Step 32).

Here, when the CPU 52 detects the touch with the finger or the pen to the displayed ruler 150 at one point (Step 33; Y), the ruler 150 is allowed to move vertically and horizontally in parallel with the operation with the finger or the pen (Step 34).

Also, when the CPU 52 detects the touch with the finger or the pen to the displayed ruler 150 at two points (Step 35; Y), the ruler 150 is allowed to move obliquely according to the angle indicated by the two points (Step 36).

Subsequently, when the CPU 52 further detects that the "measurement mode" button 400 is pressed (Step 37; Y), the display screen 51 is changed to the "digital measurement mode" (Step 38).

The "digital measurement mode" measures the dimension and the distance between the two points accurately and displays an actually measured numerical value converted from the measured value. Therefore, the pointing of the two points need to be received accurately.

Therefore, the CPU 52 displays the pointer 510 near the finger when having detected that the pointer button 500 is pressed. When the CPU 52 detects that the user performs the long-time pressing or keeps touching the display screen 51 with one finger and makes another touch with another finger at an adequate distance apart, the CPU 52 is displayed in double in magnification in the vertical and horizontal directions respectively about the position near the finger or the pointer 510. When the long-time pressing is continued or when the one touch is detected again, the drawing data is displayed in double in magnification (quadruples in total) again in the vertical and horizontal directions, respectively. In this manner, the accurate detection of the position is enabled.

The CPU 52, upon detection of commands at two points on the display screen 51 (Step 39; Y), acquires the coordinate data at the two points, and obtains the actual dimension and distance between the two points by performing a computation using a coordinate conversion value (Step 40).

Then, the CPU 52 displays the dimension and the distance using the obtained actual numerical value (Step 41).

Subsequently, if a request to return the mode from the "digital measurement mode" to the "measurement mode" is issued (Step 42; Y), the procedure goes back to Step 32, and if there is no request to return the mode to the "measurement mode" (Step 42; N), the process in the "measurement mode" is ended, and the process relating to this flowchart is ended.

Although the design drawing has been mainly described in this embodiment and the modification described above, the present invention is not limited thereto and, for example, may be applied to a display of map or the like.

Also, the present embodiment may be applied not only to the drawing data to display the actual substance in a reduced scale, but also to drawing data to display a substance in actual dimensions. In comparison with the drawing on paper, it is portable and measurement of dimensions is achieved on the display screen 51 using a normal scale.

Furthermore, in this embodiment, the enlarged display of the substance is also possible. By displaying the drawing data of a fine object on the display screen 51 in an enlarged scale, the contents can be figured out in detail or can be measured accurately.

For example, by preparing the ruler 150 having ten times scale of the actual dimensions, the ruler 150 having twenty times scale or the like, conversion is not necessary.

Although an example in which the drawing data of the digital drawing is displayed in an actual scale reduction using the resolution of the digital drawing and the display density of the display screen 51 of the tablet-type terminal device 50 has been described in this embodiment, the present invention is not limited thereto. If the drawing data displayed as the digital drawing and the displayed ruler 150 strictly match, accurate measurement is achieved. Therefore, the accuracy of the measurement is not affected even though the display density of the display screen 51 is not strictly controlled.

[Reference Numerals]

| | |
|---|---|
| 20 | drawing server |
| 50 | tablet-type terminal device |
| 51 | display screen |
| 68 | drawing display program |
| 69 | display density storage |
| 70 | ruler data storage |
| 100 | measuring device |
| 300 | "display mode" button |
| 400 | "measurement mode" button |
| 500 | pointer button |
| 510 | pointer |

**Claims**

1. A measuring device configured to display drawing data of a digital drawing on a display screen comprising:

digital drawing receiving means configured to receive the digital drawing having scale reduction data when printing the drawing data at actual dimensions;
display density data storing means configured to store data relating to a display density of the display screen;
scale reduction data extracting means configured to extract scale reduction data from the digital drawing received by the digital drawing receiving means;
requested display scale reduction receiving means configured to receive a setting of a requested display scale reduction which is a scale reduction for a display on the display screen;
display means configured to perform a computation from the display density data stored in the display density data storing means, the scale reduction data extracted by the scale reduction data extracting means, and the requested display scale reduction received by the requested display scale reduction receiving means, and display the drawing data of the digital drawing on the display screen; and

ruler display means configured to display a ruler for measuring the drawing data displayed by the display means, wherein

the graduation of the ruler displayed by the ruler display means is set on the basis of a value obtained by the computation performed by the display means.

2. The measuring device according to Claim 1, comprising:

   drawing data pointing receiving means configured to receive pointing of the drawing data displayed by the display means; and

   drawing data movement receiving means configured to move the drawing data received by the drawing data pointing receiving means in the display screen on the basis of a received command.

3. The measuring device according to Claim 1 or Claim 2, comprising:

   ruler designation receiving means configured to receive a designation of the ruler displayed by the ruler display means; and

   ruler movement receiving means configured to move the ruler in the display screen on the basis of a command given to the ruler, which is received by the ruler designation receiving means.

4. The measuring device according to Claim 3, wherein

   if commands are detected at two points of the ruler when the designation of the ruler is received by the ruler designation receiving means,

   when moving the ruler in the display screen on the basis of the command received by the ruler, the ruler movement receiving means moves the ruler on the basis of an angle indicated by the commands given to the two points.

5. A measuring device configured to display drawing data of a digital drawing on a display screen comprising:

   digital drawing receiving means configured to receive the digital drawing having scale reduction data when printing the drawing data at actual dimensions;

   display density data storing means configured to store data relating to a display density of the display screen;

   scale reduction data extracting means configured to extract scale reduction data from the digital drawing received by the digital drawing receiving means;

   requested display scale reduction receiving means configured to receive a setting of a requested display scale reduction which is a scale reduction for a display on the display screen;

   display means configured to perform a computation from the display density data stored in the display data density storing means, the scale reduction data extracted by the scale reduction data extracting means, and the requested display scale reduction received by the requested display scale reduction receiving means, and display the drawing data of the digital drawing on the display screen;

   point of measurement designation receiving means configured to receive a designation of two points on the drawing data displayed by the display means;

   distance calculating means configured to calculate the distance between the two points that the point of measurement designation receiving means receives the designation thereof on the basis of a value obtained by the computation performed by the display means; and

   distance display means configured to display a value calculated by the distance calculating means in an actual distance.

6. The measuring device according to Claim 5, comprising:

   pointer display request receiving means configured to receive a request to display a pointer for pointing one point on the drawing data when receiving the designation of the two points by the point of measurement designation receiving means; and

   pointer display means configured to display the pointer at a designated position on the display screen when the request to display the pointer is received by the pointer display request receiving means.

7. The measuring device according to Claim 5 or Claim 6, comprising:

enlargement request receiving means configured to receive a request to partially enlarge the drawing data when the designation of the two points is received by the point of measurement designation receiving means, wherein the display means display the drawing data in a partially enlarged scale according to the request of the enlargement request receiving means.

8. A measuring program to be executed by a computer in a measuring device configured to display drawing data of a digital drawing on a display screen having display density data storing means configured to store data relating to the display density of the display screen, the measuring program comprising:

a digital drawing receiving function configured to receive a digital drawing having a scale reduction data when printing the drawing data at actual dimensions;

a scale reduction data extracting function configured to extract scale reduction data from a digital drawing received by the digital drawing receiving function;

a requested display scale reduction receiving function configured to receive a setting of a requested display scale reduction which is a scale reduction for a display on the display screen;

a display function configured to perform a computation from the display density data stored in the display density data storing means, the scale reduction data extracted by the scale reduction data extracting function, and the requested display scale reduction received by the requested display scale reduction receiving function, and display the drawing data of the digital drawing on the display screen; and

a ruler display function configured to display a ruler for measuring the drawing data displayed by the display function, wherein

the graduation of the ruler displayed by the ruler display function is set on the basis of a value obtained by the computation performed by the display function.

9. A measuring program to be executed by a computer in a measuring device configured to display drawing data of a digital drawing on a display screen having display density data storing means configured to store data relating to the display density of the display screen, the measuring program comprising:

a digital drawing receiving function configured to receive the digital drawing having scale reduction data when printing the drawing data at actual dimensions;

a scale reduction data extracting function configured to extract scale reduction data from the digital drawing received by the digital drawing receiving function;

a requested display scale reduction receiving function configured to receive a setting of a requested display scale reduction which is a scale reduction for a display on the display screen;

a display function configured to perform a computation from the display density data stored in the display data density storing means, the scale reduction data extracted by the scale reduction data extracting function, and the requested display scale reduction received by the requested display scale reduction receiving function, and display the drawing data of the digital drawing on the display screen;

a point of measurement designation receiving function configured to receive a designation of two points on the drawing data displayed by the display function;

a distance calculating function configured to calculate the distance between the two points that the point of measurement designation receiving function receives the designation thereof on the basis of a value obtained by the computation performed by the display function; and

a distance display function configured to display a value calculated by the distance calculating function in an actual distance.

**Fig.1**

100

50  51

150

1/100

150

TABLET-TYPE TERMINAL DEVICE

20

DRAWING SERVER

1/100

SCALE REDUCTION 1/100

Fig.2

EP 2 767 955 A1

**Fig.3**

# Fig.4

CPU 52

50

ROM 54

RAM 62

DISPLAY SCREEN 51

IMAGE INPUT DEVICE 64

COMMUNICATING DEVICE 56

STORAGE DEVICE 66

DRAWING DISPLAY PROGRAM 68

DISPLAY DENSITY STORAGE 69

RULER DATA STORAGE 70

# Fig.5

# Fig.6

1/20
1/50
1/100
1/200

JAPANESE-STYLE
ROOM 4.5 JOU

CLOSET

WESTERN-STYLE
ROOM 17.5 JOU

WESTERN-STYLE
ROOM 10 JOU

ENTRANCE

HALL

STAIRWAY

BATHROOM

HALL

CLOSET

STORAGE

ENTRANCE

BOILER CHAMBER

DECK

DISPLAY
MODE

MEASUREMENT
MODE

EP 2 767 955 A1

# Fig.7

100

50    51    150

1/50

CLOSET    JAPANESE-STYLE
          ROOM 4.5 JOU

WESTERN-STYLE
ROOM 17.5 JOU

WESTERN-STYLE
ROOM 10 JOU

ENTRANCE

HALL

DISPLAY
MODE

MEASUREMENT
MODE

300      400              150

EP 2 767 955 A1

# Fig.8

```
                    ┌─────────────────────────┐
                    │          START          │
                    └─────────────────────────┘
S 10                            │
┌──────────────────────────────────────────────────────┐
│        ACQUIRE DESIGNATED DIGITAL DRAWING              │
└──────────────────────────────────────────────────────┘
S 11                            │
┌──────────────────────────────────────────────────────┐
│  EXTRACT ATTRIBUTE INFORMATION FROM DIGITAL DRAWING    │
└──────────────────────────────────────────────────────┘
S 12                            │
┌──────────────────────────────────────────────────────┐
│        DISPLAY DRAWING DATA ON DISPLAY SCREEN          │
└──────────────────────────────────────────────────────┘
S 13                            │                        N
   ◁────────────────────────────────────────────────────▷──┐
   │        IS REQUEST TO DISPLAY RULER ISSUED?          │   │
   ◁────────────────────────────────────────────────────▷   │
S 14                            │ Y                          │
┌──────────────────────────────────────────────────────┐    │
│        DISPLAY RULER ON DISPLAY SCREEN                 │    │
└──────────────────────────────────────────────────────┘    │
S 15                            │◀───────────────────────────┘
 N ◁────────────────────────────────────────────────────▷
   │  IS REQUEST TO CHANGE SCALE REDUCTION              │
   │  TO BE DISPLAYED ISSUED?                            │
   ◁────────────────────────────────────────────────────▷
S 16                            │ Y
┌──────────────────────────────────────────────────────┐
│        DISPLAY FIXED SCALE REDUCTION MENU             │
└──────────────────────────────────────────────────────┘
S 17                            │
┌──────────────────────────────────────────────────────┐
│   RECEIVE SELECTION OF FIXED SCALE REDUCTION VALUE    │
└──────────────────────────────────────────────────────┘
S 18                            │
┌──────────────────────────────────────────────────────┐
│ DISPLAY AT ACTUAL DIMENSION WITH SELECTED FIXED       │
│ SCALE REDUCTION VALUE AND SIMULTANEOUSLY DISPLAY      │
│ WITH GRADUATION OF RULER CHANGED                      │
└──────────────────────────────────────────────────────┘
S 19                            │                         Y
   ◁────────────────────────────────────────────────────▷──┐
   │  IS REQUEST TO DISPLAY AT OTHER FIXED SCALE        │
   │  REDUCTION VALUE ISSUED?                            │
   ◁────────────────────────────────────────────────────▷
                                │ N
                    ┌─────────────────────────┐
                    │           END           │
                    └─────────────────────────┘
```

# Fig.9

1/123

CLOSET

JAPANESE-STYLE
ROOM 4.5 JOU

WESTERN-STYLE
ROOM 17.5 JOU

WESTERN-STYLE
ROOM 10 JOU

ENTRANCE

HALL

STAIRWAY

BATHROOM

HALL

CLOSET

STORAGE

ENTRANCE

BOILER CHAMBER

DECK

DISPLAY
MODE

MEASUREMENT
MODE

EP 2 767 955 A1

EP 2 767 955 A1

# Fig.10

# Fig.11

100

51

50

150

1/123

JAPANESE-STYLE ROOM 4.5 JOU

WESTERN-STYLE ROOM 10 JOU

CLOSET

CLOSET

BOILER CHAMBER

HALL

ENTRANCE

DECK

WESTERN-STYLE ROOM 17.5 JOU

BATHROOM

HALL

ENTRANCE

STORAGE

STAIRWAY

150

DISPLAY MODE

MEASUREMENT MODE

POINTER

300

400

500

# Fig.12

1/123

WESTERN-STYLE
ROOM 17.5 JOU

JAPANESE-STYLE
ROOM 05 JOU

CLOSET

STERN-STYLE
10 JOU

ENTRANCE

HALL

STAIRWAY

STORAGE

BATHROOM

HALL

CLOSET

ENTRANCE

BOILER CHAMBER

DECK

| DISPLAY MODE | MEASUREMENT MODE | POINTER |
|---|---|---|

300

400

500

EP 2 767 955 A1

EP 2 767 955 A1

# Fig.13

1/123

12,345mm

CLOSET

JAPANESE-STYLE
ROOM 4.5 JOU

WESTERN-STYLE
ROOM 17.5 JOU

WESTERN-STYLE
ROOM 10 JOU

ENTRANCE

HALL

STAIRWAY

STORAGE    BATHROOM    ENTRANCE    BOILER CHAMBER

HALL    CLOSET

DECK

DISPLAY
MODE

MEASUREMENT
MODE

POINTER

300    400    500    150

# Fig.14

1/123

WESTERN-STYLE ROOM 17.5 JOU

JAPANESE-STYLE ROOM 4.5 JOU

CLOSET

WESTERN-STYLE ROOM 10 JOU

ENTRANCE

HALL

STAIRWAY

STORAGE

BATHROOM

HALL

CLOSET

ENTRANCE

BOILER CHAMBER

DECK

DISPLAY MODE

MEASUREMENT MODE

POINTER

300    400    500    150

## Fig.15

EP 2 767 955 A1

## Fig.16

```
            ( PROCEDURE OF MEASUREMENT MODE )
                          │
     ┌────────────────────┼──────────────────────────────┐
     │   S 30             ▼                                │
     │  ┌──────────────────────────────────────────────┐  │
     │  │ DISPLAY MODE IN WHICH RULER IS DISPLAYED      │  │
     │  └──────────────────────────────────────────────┘  │
     │   S 31             │ ◄───────────────────────────┐  │
     │  ╱───────────────────────────────────────╲   N   │  │
     │  ╲ IS REQUEST OF MEASUREMENT MODE ISSUED? ╱───────┘  │
     │   └──────────────┬Y─────────────────────             │
     │   S 32           │ ◄──────────────────────────────┐  │
     │  ┌──────────────────────────────────────────────┐ │  │
     │  │ CHANGE TO MEASUREMENT MODE                    │ │  │
     │  │ (STOP ENLARGEMENT AND REDUCTION OF DRAWING DATA)│ │  │
     │  └──────────────────────────────────────────────┘ │  │
     │   S 33           │                                 │  │
     │ N ╱───────────────────────────────╲               │  │
     │ ┌─╲ IS REQUEST TO MOVE RULER AT    ╱               │  │
     │ │ ╲ ONE-POINT DESIGNATION ISSUED? ╱                │  │
     │ │  S 34          │Y                                │  │
     │ │ ┌─────────────────────────────────────────┐     │  │
     │ │ │ MOVE RULER VERTICALLY OR HORIZONTALLY    │     │  │
     │ │ │ IN PARALLEL                              │     │  │
     │ │ └─────────────────────────────────────────┘     │  │
     │ └──────────────►│                                 │  │
     │   S 35          │                                 │  │
     │ N ╱───────────────────────────────╲               │  │
     │ ┌─╲ IS REQUEST TO MOVE RULER AT    ╱               │  │
     │ │ ╲ TWO-POINT DESIGNATION ?       ╱                │  │
     │ │  S 36          │Y                                │  │
     │ │ ┌─────────────────────────────────────────┐     │  │
     │ │ │ MOVE RULER OBLIQUELY ACCORDING TO        │     │  │
     │ │ │ ANGLE INDICATED BY TWO POINTS            │     │  │
     │ │ └─────────────────────────────────────────┘     │  │
     │ └──────────────►│                                 │  │
     │   S 37          │                                 │  │
     │ N ╱───────────────────────────────╲               │  │
     │◄─╲ IS REQUEST OF DIGITAL MEASUREMENT╱              │  │
     │  ╲ MODE ISSUED?                    ╱               │  │
     │   S 38          │Y                                │  │
     │  ┌─────────────────────────────────────────┐      │  │
     │  │ CHANGE TO DIGITAL MEASUREMENT MODE       │      │  │
     │  └─────────────────────────────────────────┘      │  │
     │   S 39          │ ◄─────────────────────────────┐ │  │
     │  ╱───────────────────────────────╲    N         │ │  │
     │  ╲ IS DESIGNATION OF TWO POINTS TO BE ╱──────────┘ │  │
     │  ╲ MEASURED ISSUED?               ╱               │  │
     │   S 40          │Y                                │  │
     │  ┌─────────────────────────────────────────┐      │  │
     │  │ ACQUISITION OF TWO-POINT COORDINATE DATA,│      │  │
     │  │ COMPUTATION OF DISTANCE                  │      │  │
     │  └─────────────────────────────────────────┘      │  │
     │   S 41          │                                 │  │
     │  ┌─────────────────────────────────────────┐      │  │
     │  │ DISPLAY DIMENSIONS AND DISTANCE WITH     │      │  │
     │  │ CONVERTED ACTUAL NUMERICAL VALUE         │      │  │
     │  └─────────────────────────────────────────┘      │  │
     │   S 42          │                                 │  │
     │  ╱───────────────────────────────╲   Y            │  │
     │  ╲ IS REQUEST TO RETURN TO MEASUREMENT ╱──────────┘  │
     │  ╲ MODE ISSUED?                   ╱                  │
     │                 │N                                   │
     └─────────────────┘                                   
```

## INTERNATIONAL SEARCH REPORT

| | International application No. |
|---|---|
| | PCT/JP2012/057899 |

**A. CLASSIFICATION OF SUBJECT MATTER**
*G06T11/80*(2006.01)i, *G06F3/048*(2006.01)i, *G06F17/50*(2006.01)i

According to International Patent Classification (IPC) or to both national classification and IPC

**B. FIELDS SEARCHED**

Minimum documentation searched (classification system followed by classification symbols)
G06T11/80, G06F3/048, G06F17/50

Documentation searched other than minimum documentation to the extent that such documents are included in the fields searched
Jitsuyo Shinan Koho       1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-203495 A  (Fujitsu Ltd.),<br>30 July 1999 (30.07.1999),<br>paragraphs [0034] to [0066]; fig. 16<br>(Family: none) | 1-9 |
| Y | JP 2001-166763 A  (Sharp Corp.),<br>22 June 2001 (22.06.2001),<br>paragraphs [0024] to [0029]; fig. 1 to 3<br>(Family: none) | 1-9 |
| Y | JP 09-259295 A  (Kabushiki Kaisha Basu),<br>03 October 1997 (03.10.1997),<br>paragraphs [0040] to [0044]; fig. 1<br>(Family: none) | 2-4,6-7 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>02 May, 2012 (02.05.12) | Date of mailing of the international search report<br>22 May, 2012 (22.05.12) |
|---|---|
| Name and mailing address of the ISA/<br>Japanese Patent Office | Authorized officer |
| Facsimile No. | Telephone No. |

Form PCT/ISA/210 (second sheet) (July 2009)

<table>
<tr><td colspan="2" align="center">**INTERNATIONAL SEARCH REPORT**</td><td>International application No.</td></tr>
<tr><td colspan="2"></td><td>PCT/JP2012/057899</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-095823 A  (Seiko Epson Corp.),<br>12 May 2011 (12.05.2011),<br>paragraphs [0049] to [0051]; fig. 8<br>(Family: none) | 1-9 |
| A | JP 07-282122 A  (NEC Home Electronics Ltd.),<br>27 October 1995 (27.10.1995),<br>claim 1; fig. 1<br>(Family: none) | 1-9 |
| A | JP 06-105126 A  (Sharp Corp.),<br>15 April 1994 (15.04.1994),<br>paragraphs [0023] to [0029]; fig. 1<br>& US 5424853 A        & US 5517326 A<br>& US 5589949 A        & US 5663809 A<br>& EP 621547 A2        & DE 69427608 D<br>& DE 69427608 T | 1-9 |

Form PCT/ISA/210 (continuation of second sheet) (July 2009)

**REFERENCES CITED IN THE DESCRIPTION**

**Patent documents cited in the description**

- JP 9259295 A